# DEMANDE DE BREVET EUROPEEN

(11) **EP 1 939 632 A1**
(43) Date de publication de la demande: **02.07.2008**
(21) Numéro de dépôt: 06127383.5
(22) Date de dépôt: 29.12.2006
(51) Int. Cl.: G01P 13/00, G01P 3/487, B60J 7/057

(54) **Capteur de détection d'un mouvement pour un système d'assistance motorisée d'un ouvrant d'un véhicule automobile**

(71) Demandeur: Valeo Sicherheitssysteme GmbH, 85253 Erdweg (DE)
(72) Inventeur: Géhin, Frédéric, c/o Valeo Sécurité Habitacle, 94042 Créteil Cédex (FR)
(74) Mandataire: Croonenbroek, Thomas Jakob

(57) **Abrégé**

La présente invention a pour objet un capteur de détection (15) d'un déplacement pour un système d'assistance motorisée d'un ouvrant d'un véhicule automobile, comprenant
- une cible (16) destinée à être liée en mouvement à l'ouvrant dont le déplacement doit être détecté,
- au moins un composant électrique (17,18) interagissant avec la cible (16) de manière à générer un signal de sortie caractéristique du déplacement de la cible (16).
Le capteur comprend une unité (21) de gestion de l'alimentation électrique dudit composant (17,18) avec un mode de consommation d'énergie réduite (sleep mode) qui est configurée de manière à alimenter le composant (17,18) en veille périodiquement pendant un intervalle de temps permettant de détecter un changement de position de la cible (16), la période entre deux intervalles de temps étant choisie de manière à pouvoir détecter une vitesse de déplacement prédéfinie maximale de la cible (16).

## Description

La présente invention est relative à un capteur de détection d'un mouvement pour un système d'assistance motorisée d'un ouvrant d'un véhicule automobile.

On connaît déjà des systèmes d'assistance motorisée d'un ouvrant d'un véhicule automobile tel que le coffre, le hayon ou une porte latérale. Ces systèmes comprennent en général une unité motorisée servant à déplacer, suite à une commande d'un utilisateur, l'ouvrant depuis une position fermée vers une position ouverte ou vice-versa. Bien entendu, toute position intermédiaire est également envisageable.

Pour ces systèmes, la sûreté de fonctionnent est primordial et ainsi, il est important que le système connaisse toujours la position de l'ouvrant à déplacer.

En effet, le déplacement de l'ouvrant est commandé en fonction de la position de départ et en fonction de la direction du mouvement (ouverture ou fermeture) selon des profils de vitesses prédéfinis.

Par exemple pour une fermeture d'un coffre, ce dernier doit être accéléré à une certaine vitesse pour pouvoir comprimer les joints du coffre suffisamment afin de permettre l'enclenchement du pêne dans la gâche de la serrure de coffre.

Pour une ouverture, la vitesse en fin de course vers la position complètement ouverte doit être peu importante pour ne pas endommager les charnières, notamment par une vitesse excessive en fin de course.

On comprend donc qu'il est important de connaître la position de départ du coffre pour choisir le profil de vitesses adapté pour le mouvement demandé.

Or, pour ces systèmes, l'ouverture ou a fermeture de l'ouvrant peut non seulement être réalisée par l'unité motorisée, mais aussi par une action manuelle de l'utilisateur. Ainsi, après avoir chargé par exemple le coffre de son véhicule, l'utilisateur a la possibilité de fermer le coffre soit par une commande électrique qui déclenche la mise en marche de l'unité motorisée pour entraîner le coffre vers la position de fermeture, soit par un simple appui sur le coffre pour une fermeture manuelle.

Pour connaître la position de départ du coffre, on peut utiliser des capteurs de position du coffre qui sont par exemple intégrés dans l'unité motorisée.

Toutefois, la Demanderesse a constaté que ces capteurs connus ont une consommation électrique trop élevée.

En effet, pour connaître la position de l'ouvrant, ces capteurs connus doivent être alimenté en permanence et comme souvent l'ouverture ou la fermeture de l'ouvrant se réalise à l'arrêt du véhicule, en particulier avec un moteur de propulsion arrêté, l'énergie doit provenir de la batterie de bord dont l'état de charge peut diminuer rapidement si elle est trop sollicitée par des systèmes et capteurs dont la consommation électrique n'est pas maîtrisée.

La présente invention vise à proposer un capteur de détection d'un mouvement pour un système d'assistance motorisée d'un ouvrant d'un véhicule automobile dont la consommation électrique est mieux maîtrisée.

A cet effet, l'invention a pour objet un capteur de détection d'un déplacement pour un système d'assistance motorisée d'un ouvrant d'un véhicule automobile, comprenant
- une cible destinée à être liée en mouvement à l'ouvrant dont le déplacement doit être détecté,
- au moins un composant électrique interagissant avec la cible de manière à générer un signal de sortie caractéristique du déplacement de la cible,
caractérisé en ce qu'il comprend une unité de gestion de l'alimentation électrique dudit composant qui est configurée de manière à alimenter le composant en veille périodiquement pendant un intervalle de temps permettant de détecter un changement de position de la cible, la période entre deux intervalles de temps étant choisie de manière à pouvoir détecter une vitesse de déplacement prédéfinie maximale de la cible.

D'autres caractéristiques et avantages de l'invention ressortiront de la description suivante, donnée à titre d'exemple, sans caractère limitatif, en regard des dessins annexés sur lesquels :
- la figure 1 est une vue schématique de la partie arrière d'un véhicule automobile équipé d'un système d'assistance motorisée d'un ouvrant d'un véhicule automobile selon l'invention avec son capteur de détection d'un déplacement,
- la figure 2 est une vue de côté avec une partie en coupe partielle d'un système d'assistance motorisée d'un ouvrant d'un véhicule automobile, et
- la figure 3 est un schéma synoptique d'un capteur de détection d'un déplacement selon l'invention.

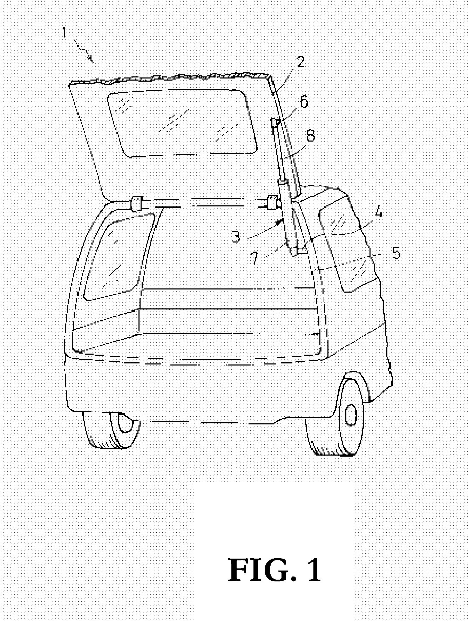

Sur la figure 1 est représenté un véhicule automobile 1 comprenant un ouvrant 2 tel qu'un hayon. Bien entendu, par ouvrant d'un véhicule automobile, on comprend également le coffre ou encore les portes latérales du véhicule.

Ce véhicule est équipé d'un système 3 d'assistance motorisée d'un ouvrant d'un véhicule automobile.

A cet effet une extrémité du système 3 est reliée à une première articulation 4 à la carrosserie 5 du véhicule et l'autre extrémité est reliée à une seconde articulation 6 au niveau du hayon 2.

Ce système 3 d'assistance motorisée permet d'amener le hayon 2 d'une position prédéterminée de départ, par exemple une position fermée ou une position ouverte, vers une position d'arrivée tel qu'une position ouverte ou une position fermée. Bien entendu, les positions de départ et d'arrivée ne sont pas nécessairement des positions de fin de course du hayon, mais peuvent être aussi une quelconque position intermédiaire.

Ce système d'assistance motorisée 3 est conçu de manière à permettre aussi une ouverture manuelle du hayon 3 par un utilisateur.

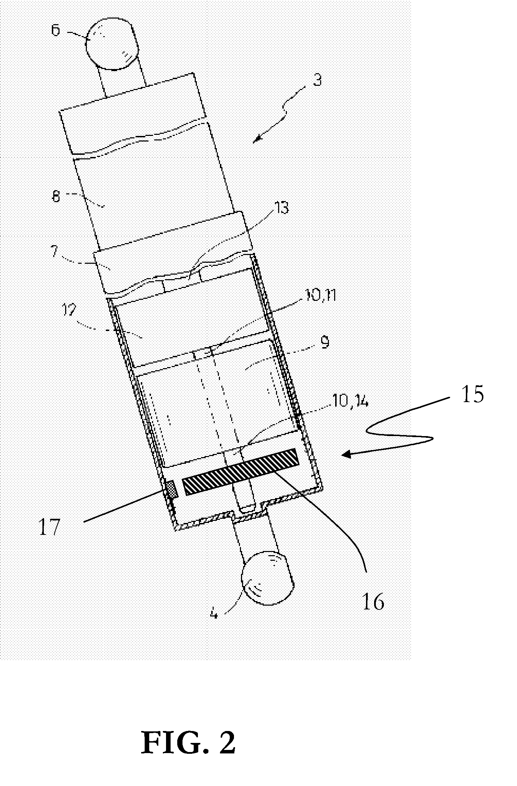

Comme on le voit sur la figure 2, le système d'assistance motorisée 3 comprend deux parties de boîtier 7 et 8 de forme tubulaire et insérées l'une dans l'autre de façon à pourvoir s'allonger et raccourcir de façon télescopique.

La première partie de boîtier 7 possède un diamètre plus large et loge un moteur électrique 9. Ce moteur possède un arbre de sortie 10 qui est en prise sur un côté 11 avec une boîte d'engrenages 12. Cette boîte d'engrenages 12 possède un arbre 13 de sortie qui est en prise avec un entraînement à vis - écrou (non représenté).

Sur l'autre côté 14, opposé à la boîte d'engrenages 12, l'arbre de sortie 10 du moteur électrique 9 est relié à un capteur 15 de détection d'un déplacement selon l'invention.

Il est à noter que lors d'une action manuelle sur le hayon 2, le système d'assistance motorisée 3 est entraîné en mouvement, car la boîte d'engrenages 12 n'est pas autobloquante. Ainsi, une telle action manuelle va faire tourner la boîte d'engranges 12 et aussi le moteur 9 avec son arbre de sortie 10.

Toutefois, il existe des variantes de systèmes d'assistance motorisée qui comportent des embrayages de sorte qu'une action manuelle sur le hayon reste sans effet sur la boîte d'engrenages et le moteur électrique.

Dans ce cas, il suffit que le capteur soit disposé dans le système d'assistance motorisée avant l'embrayage, c'est-à-dire qu'il est toujours lié en mouvement avec le hayon ou qu'il soit disposé à part, par exemple dans une charnière.

Le capteur 15 comprend une cible 16 destinée à être liée en mouvement à l'ouvrant 2 dont le déplacement doit être détecté et au moins un, de préférence deux composants électriques 17 et 18 qui interagissent avec la cible 16 de manière à générer un signal de sortie caractéristique du déplacement de la cible 16.

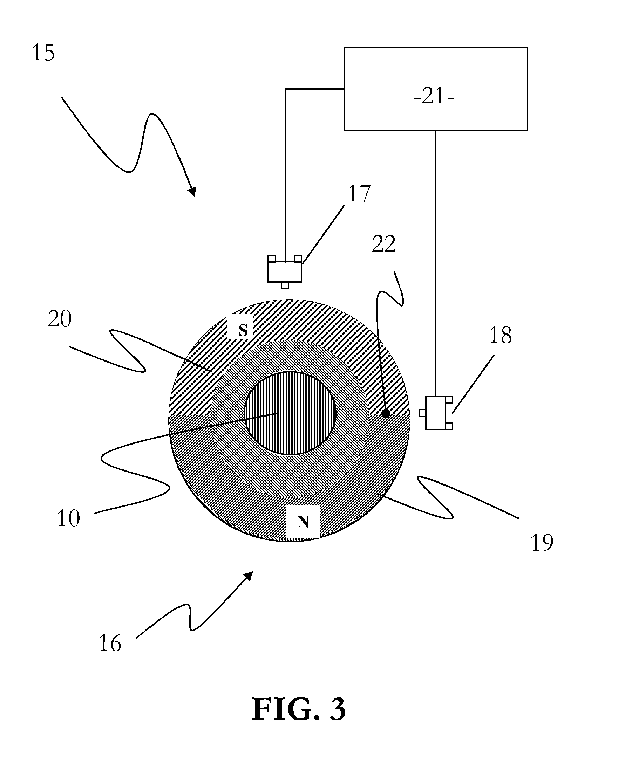

Comme on le voit sur la figure 3, la cible 16 est de préférence une cible magnétique, par exemple sous forme d'un disque magnétique avec un pôle Nord 19 et avec un pôle Sud 20 sous forme de demi-cercles disposés en alternance. Bien entendu, on peut aussi envisager d'avoir plus que deux pôles magnétiques, à condition de disposer d'un nombre pair de pôles Nord et Sud en alternance.

Ce disque est porté par l'arbre de sortie 10 du moteur 9 et ainsi entraîné en rotation par un déplacement de l'ouvrant 2.

Le ou les composants électriques 17, 18 sont aptes à mesurer un changement du champ magnétique dû à un mouvement de la cible 16. Il s'agit par exemple de sondes à effet Hall.

Ces composants 17 et 18 sont disposés en vis-à-vis du disque magnétique 16 et portés de préférence par le boîtier 7 (voir figure 2).

Avantageusement, les premier et deuxième composants électriques 17 et 18 sont décalés angulairement par rapport à la cible de manière qu'une transition 22 entre un pôle Nord et un pôle Sud ne peut être en vis-à-vis que d'un seul composant électrique à la fois. Sur la figure 3, on voit qu'avec un pôle Nord 19 et un pôle Sud 20 que les premier 17 et deuxième 18 composants électriques sont décalés angulairement par rapport à la cible 16 de 90°.

Selon l'invention, le capteur comprend une unité de gestion 21 de l'alimentation électrique du ou des composants 17, 18, par exemple un microprocesseur programmable.

Cette unité 21 est reliée à chacun des composants 17 et 18 pour gérer leur alimentation, en particulier en état de veille, et pour traiter et exploiter avantageusement les signaux de sortie des ces composants.

Pour optimiser la consommation électrique du capteur selon l'invention, l'unité 21 est configurée de manière à alimenter le composant 17 en veille périodiquement pendant un intervalle de temps permettant de détecter un changement de position de la cible 16, la période entre deux intervalles de temps étant choisie de manière à pouvoir détecter une vitesse de déplacement prédéfinie maximale de la cible.

En d'autres termes, chaque composant possède un intervalle ou une durée minimale d'alimentation nécessaire pour obtenir en sortie un signal caractéristique fiable. Par conséquent en état de veille, l'intervalle d'alimentation des composants par l'unité 21 correspond essentiellement à cette durée minimale permettant d'obtenir un signal de sortie électrique fiable pour savoir si la cible 16 et donc le hayon 2 s'est déplacée ou non. A ce stade, il s'agit essentiellement de détecter une sorte de changement d'état, c'est-à-dire on souhaite détecter que la cible 16 a été mise en mouvement ou non, le but étant de pouvoir réveiller le capteur le plus rapidement possible pour ne pas perdre une information sur la position du hayon 2, tout en optimisant l'alimentation électrique.

C'est pourquoi on choisit la période de non alimentation électrique des composants 17 et 18 en fonction de la vitesse maximale de déplacement de l'ouvrant 2 et donc de l'impact de cette vitesse de déplacement maximale sur le déplacement de la cible 16 en tenant compte de la chaîne de transmission du mouvement du hayon 2 vers la cible 16.

On comprend donc que la vitesse de déplacement maximale de l'ouvrant va définir une vitesse maximale de déplacement de la cible 16.

Puis, il suffit de choisir la période de non alimentation électrique de telle manière que par exemple en référence à la figure 3 sur laquelle la sonde à effet Hall 17 est en face du pôle Sud, avec une vitesse maximale de déplacement, la cible 16 (donc la vitesse de rotation) n'est déplacée que d'environ 180° de sorte que le pôle Nord se trouve maintenant en face de la sonde 17.

Bien entendu, en cas d'un nombre de pôles magnétiques plus importante, il est nécessaire d'adapter la période pour qu'un déplacement à vitesse maximale de la cible ne puisse provoquer qu'un seul changement d'état afin de ne pas perdre des informations de position.

Etant donné des forces d'amortissement appliquées à chaque ouvrant d'un véhicule, par exemple des vérins ou amortisseurs pour limiter la vitesse de mouvement des ouvrants, la vitesse maximale de déplacement de l'ouvrant, et donc la vitesse maximale de déplacement de la cible peuvent être mesurées aisément pour chaque véhicule et pour chaque ouvrant.

A titre d'exemple pour une configuration telle que présentée sur les figures, la Demanderesse a constaté qu'une période de non alimentation électrique entre deux intervalles de temps est comprise avantageusement entre 10ms et 20ms, de préférence entre 11ms et 15ms.

Selon une première variante et dans le cas de plusieurs composants électriques 17 et 18, l'unité de gestion 21 peut appliquer les intervalles d'alimentation et les périodes de non alimentation électrique tel que décrit ci-dessus à tous les composants en même temps.

Toutefois, il s'est avéré encore plus judicieux que l'unité 21 est configurée de manière à alimenter en veille seulement un premier composant électrique 17 périodiquement pendant un intervalle de temps permettant de détecter un changement de position de la cible, la période entre deux intervalles de temps étant choisie de manière à pourvoir détecter une vitesse de déplacement prédéfinie maximale de la cible.

C'est donc seulement si un déplacement de la cible 16 est détecté que l'unité 21 bascule d'un mode d'alimentation de veille à un mode d'alimentation actif où tous les composants électriques du capteur sont alimentés en permanence.

Par ailleurs, la Demanderesse a constaté que pour une cible magnétique tel que présentée sur la figure 3, une difficulté dans la détection du déplacement d'une cible peut résider dans le fait qu'un composant par exemple 18 se trouve en face d'une zone de transition 22 entre pôle Nord et pôle Sud.

En effet, dans ce cas le signal de sortie du composant 18 devient indéterminé de sorte que ce signal pourrait être confondu avec un déplacement de la cible.

Dans ce cas ou pour garder une alimentation électrique optimisée, l'unité de gestion 21 est configurée de manière qu'après une détection de déplacement de la cible par le premier composant par exemple 18, seulement le deuxième composant électrique est alimenté pendant un intervalle de temps permettant de détecter un changement de position de la cible afin de confirmer la détection du premier composant.

Ainsi, si le signal de sortie du premier composant 18 était dû à la présence d'une zone de transition et non à un déplacement de la cible, le deuxième composant 17 ne délivre pas de signal correspondant à un déplacement de la cible 16 et l'unité 21 reste en mode d'alimentation de veille.
Par contre si le deuxième composant confirme le déplacement de la cible 16, alors l'unité de gestion 21 est configurée de manière à alimenter tous les composants électriques 17, 18 en permanence.

On comprend donc que le capteur selon l'invention est spécifiquement adapté pour un système d'assistance motorisée d'un ouvrant d'un véhicule automobile et répond aux exigences sévères d'une part de sécurité afin de connaître à tout moment la position exacte du hayon et d'autre part d'alimentation électrique pour avoir un mode veille optimisé. Une telle optimisation en mode veille est d'autant plus important que la manipulation de l'ouvrant de façon motorisée ou manuelle est réalisée avec le moteur de propulsion du véhicule éteint de sorte que le capteur doit directement s'alimenter sur les ressources de réserve du véhicule tel que la batterie.

## Revendications

1. Capteur de détection (15) d'un déplacement pour un système (3) d'assistance motorisée d'un ouvrant (2) d'un véhicule automobile, comprenant
- une cible (16) destinée à être liée en mouvement à l'ouvrant (2) dont le déplacement doit être détecté,
- au moins un composant électrique (17, 18) interagissant avec la cible (16) de manière à générer un signal de sortie caractéristique du déplacement de la cible(16),
**caractérisé en ce qu'**il comprend une unité (21) de gestion de l'alimentation électrique dudit composant (17, 18) qui est configurée de manière à alimenter le composant (17, 18) en veille périodiquement pendant un intervalle de temps permettant de détecter un changement de position de la cible (16), la période entre deux intervalles de temps étant choisie de manière à pouvoir détecter une vitesse de déplacement prédéfinie maximale de la cible (16).

2. Capteur de détection selon la revendication 1, **caractérisé en ce que** la période de non alimentation électrique entre deux intervalles de temps est comprise entre 10ms et 20ms, de préférence entre 11ms et 15ms.

3. Capteur de détection selon la revendication 1 ou 2, **caractérisé en ce que** ladite unité (21) de gestion est configurée de manière à alimenter ledit composant électrique en permanence lorsqu'un déplacement de la cible (16) est détectée.

4. Capteur de détection selon l'une quelconque des revendications 1 à 3, **caractérisé en ce que** la cible (16) est une cible magnétique **en ce que** le composant électrique (17, 18) est apte à mesurer un changement du champ magnétique dû à un mouvement de la cible (16).

5. Capteur de détection selon la revendication 4, **caractérisé en ce que** le composant électrique (17, 18) comprend une sonde à effet Hall.

6. Capteur de détection selon l'une quelconque des revendication 4 à 5, **caractérisé en ce que** la cible (16) comprend un disque magnétique avec au moins un pôle Nord (19) et un pôle Sud (20) disposés en alternance et destiné à être entraîné en rotation par un déplacement de l'ouvrant (2), et au moins un premier (17) et un deuxième (18) composants électriques disposés à distance l'un de l'autre, et **en ce que** ladite unité de gestion est configurée de manière à alimenter en veille seulement le premier (17) composant électrique périodiquement pendant un intervalle de temps permettant de détecter un changement de position de la cible (16), la période entre deux intervalles de temps étant choisie de manière à pourvoir détecter une vitesse de déplacement prédéfinie maximale de la cible.

7. Capteur de détection selon la revendication 6, **caractérisé en ce que** ladite unité (21) de gestion est configurée de manière qu'après une détection de déplacement de la cible (16) par le premier composant (17), seulement le deuxième composant électrique (18) est alimenté pendant un intervalle de temps permettant de détecter un changement de position de la cible afin de confirmer la détection du premier composant (18).

8. Capteur de détection selon la revendication 7, **caractérisé en ce que** ladite unité de gestion (21) est configurée de manière à alimenter tous les composants électriques (17, 18) en permanence lorsqu'un déplacement de la cible (16) est confirmé par la détection d'un changement de position par le second composant électrique (18).

9. Capteur de détection selon l'une quelconque des revendications 6 à 8, **caractérisé en ce que** les premier (17) et deuxième (18) composants électriques sont décalés angulairement par rapport au disque magnétique de manière qu'une transition (22) entre un pôle Nord (19) et un pôle Sud (20) ne peut être en vis-à-vis que d'un seul composant électrique (18) à la fois.

10. Système (3) d'assistance motorisée de déplacement d'un ouvrant d'un véhicule automobile, **caractérisé en ce qu'**il comprend un capteur (15) selon l'une quelconque des revendications 1 à 9.
